# EUROPÄISCHE PATENTSCHRIFT

(11) **EP 0 670 106 B1**
(45) Veröffentlichungstag und Bekanntmachung des Hinweises auf die Patenterteilung: **16.06.1999**
(21) Anmeldenummer: 94114123.6
(22) Anmeldetag: 08.09.1994
(51) Int. Cl.: A01D 41/02, A01F 7/06

(54) **Selbstfahrender Mähdrescher**
Self-propelled combine harvester
Moissonneuse batteuse automatrice

(30) Priorität: 19.02.1994 DE 4405337
(43) Veröffentlichungstag der Anmeldung: 06.09.1995
(73) Patentinhaber: Case Harvesting Systems GmbH, 01844 Neustadt (DE)
(72) Erfinder: Voss, Lothar, Dr.-Ing., D-01844 Neustadt (DE); Noack, Christian, Dipl.-Ing., D-02694 Guttau (DE); Eckert, Klaus, Dipl.-Ing., D-02742 Neusalza-Spremberg (DE); Windisch, Volker, Dipl.-Ing., D-02692 Obergurig (DE); Löbel, Wolf-Carsten, Dipl.-Ing., D-02694 Malschwitz (DE)
(74) Vertreter: Müller, Lutz

(56) Entgegenhaltungen:
- AT-B- 384 708
- DD-A- 294 621
- DE-A- 3 325 951
- DE-A- 3 515 451
- DE-A- 4 023 894
- US-A- 4 712 568
- US-A- 4 906 219

## Beschreibung

Die Erfindung bezieht sich auf einen selbstfahrenden Mähdrescher mit einem Schneidwerk, einer Drescheinrichtung und einer Korn-Beimengungs-Trenneinrichtung.
Derartige Mähdrescher, die nach dem Axial- oder Tangentialdreschverfahren arbeiten und die mit rotierenden oder schwingenden Siebreinigungen ausgerüstet sind, sind bereits in verschiedenen Ausführungen bekannt.

So ist beispielsweise in der DE 40 23 894 A1 ein Axialflußmähdrescher mit längs zur Fahrtrichtung angeordneten Dresch- und Trenntrommeln sowie mit einer sich daran anschließenden Reinigungseinrichtung dargestellt, bei dem die Dresch- und Trenntrommeln zwischen dem Schneidwerk und der Reinigungseinrichtung in einem Gehäuse angeordnet sind, das mit dem Maschinenrahmen in der vertikalen Ebene schwenkbar verbunden und im Bereich zwischen den Vorderrädern angeordnet ist. Im Auswurfbereich der Dresch- und Trenntrommeln sind seitlich angebrachte Abgabeöffnungen für das Stroh angebracht. Unterhalb der Dresch- und Trenntrommeln sind mehrere Förderschnecken angeordnet, die sich bis in den Bereich der Reinigungseinrichtung erstrecken. Das Trennen des Korn-Kurzstroh-Gemisches erfolgt in einer rotierenden Reinigungseinrichtung.

Die Leistungsfähigkeit dieses Mähdreschers wird durch den möglichen Durchsatz der Dresch- und Trenntrommeln sowie durch die verwendete rotierende Reinigungseinrichtung bestimmt. Da eine weitere Leistungssteigerung damit nicht möglich ist, kann dieses Dresch- und Trennprinzip nur für Mähdrescher mit einer mittleren Durchsatzleistung verwendet werden.

Der Erfindung liegt die Aufgabe zugrunde, durch eine vorteilhafte Ausführung und Anordnung der Drescheinrichtung sowie der Korn-Stroh-Trenneinrichtung einen Mähdrescher mit einer hohen Leistungsfähigkeit und einer kompakten Bauweise bei Einhaltung der zulässigen Abmessungen beim Verkehr auf öffentlichen Straßen zu entwickeln.

Erfindungsgemäß wird dies durch folgende Merkmale gelöst:
a) die Drescheinrichtung ist in einem schwenkbaren Gehäuse angeordnet, das sich unmittelbar an das Schneidwerk anschließt und mit diesem lösbar verbunden ist,
b) unterhalb des abgabeseitigen Abscheidebereiches der Drescheinrichtung ist eine pneumatische Fördereinrichtung angeordnet,
c) an den Auswurfbereich der pneumatischen Fördereinrichtung schließt sich ein luftdurchströmter Sichterraum an,
d) unterhalb des Sichterraumes ist eine Siebeinrichtung angeordnet,
e) unterhalb des Abgabebereiches der Drescheinrichtung ist, für das Stroh ein Trommelseparator oder eine freie Durchtrittsöffnung zum Feldboden angeordnet.

Nach weiteren Merkmalen der Erfindung ist unterhalb des abgabeseitigen Abscheidebereiches der Drescheinrichtung eine quer zur Fahrtrichtung verlaufende, mittig geteilte Förderschnecke mit einem Fördergebläse angeordnet. An die Auswurföffnung des Fördergebläses schließt sich ein Förderkanal an, der in den Sichterraum mündet. In dem nach hinten offenen Sichterraum sind im unteren Bereich ein schwingbeweglicher Siebboden und zwei darunter befindliche Rücklaufböden angeordnet. Oberhalb des Bereiches des Sichterraumes ist ein Korntank und unterhalb eine Korn-Beimengungs-Siebeinrichtung mit ebenen oder rotierenden Sieben angeordnet. Der unterhalb des Abgabebereiches der Drescheinrichtung quer zur Fahrtrichtung angeordnete Trommelseparator besteht aus einer angetriebenen Trommel mit am Umfang angebrachten Förderleisten.
Die Trommel ist im oberen Bereich von einer geschlossenen halbzylindrischen Abdeckung mit gewendelten Förderrippen und im unteren Bereich von einem Abscheidekorb umgeben.

Die Förderrippen sind so angeordnet, daß das Stroh nach mehreren Umlaufbewegungen um die Trommel von der Mitte aus nach beiden seitlichen Enden förderbar ist. An beiden Enden des Trommelseparators sind Häckseleinrichtungen angeordnet. An die Häckseleinrichtungen schließen sich Auswurfkanäle an. Unterhalb der Auswurfkanäle sind rotierende Strohverteiler angeordnet.
Das Fahrwerk des Mähdreschers ist vorzugsweise mit einer pendelnden Vorderachse mit lenkbaren Vorderrädern und einer starr am Maschinenrahmen befestigten Hinterachse versehen. Für die Feldfahrt ist ein Allradantrieb zuschaltbar und für die Straßenfahrt nur ein Antrieb der Vorderräder oder Hinterräder vorgesehen.

Durch die erfindungsgemäße Lösung wird ein Mähdrescher mit einer hohen Leistungsfähigkeit und einer kompakten Bauweise geschaffen.
Die vorteilhafte Ausbildung und Anordnung der Funktionsbaugruppen ermöglicht die Einhaltung der zulässigen Außenabmessungen beim Verkehr auf öffentlichen Straßen. Sämtliche Fördereinrichtungen für das Erntegut erfüllen gleichzeitig Arbeitsaufgaben. Dadurch wird Bauraum eingespart, der für die Anordnung von neuen Funktionseinrichtungen und für die Vergrößerung des Korntanks verwendet wird. Da sich die Drescheinrichtung unmittelbar an das Schneidwerk anschließt, wird der Dreschvorgang frühzeitig beendet und das Stroh auf den Feldboden abgegeben, so daß keine Belastung der folgenden Korn-Trenneinrichtungen mit dem Stroh erfolgt und dadurch die Effektivität dieser Einrichtungen gesteigert wird.
Zur Leistungssteigerung trägt ebenfalls der separate luftdurchströmte Sichterraum bei, in dem das Erntegutgemisch einem intensiven Sichtungsvorgang unterzogen und ein Großteil der leichten Beimengungsbestandteile schon vor der Siebeinrichtung aus dem Mähdrescher entfernt wird. Dadurch wird die Siebeinrichtung wesentlich entlastet und der Reinheitsgrad der abgeschiedenen Körner erhöht.

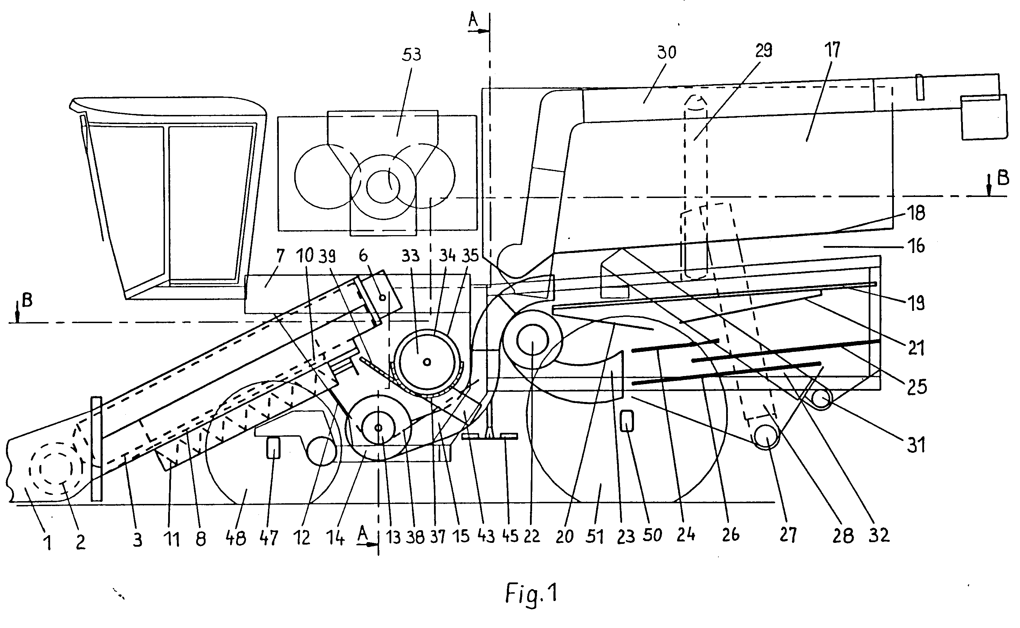

Die Erfindung wird nachstehend an einem Ausführungsbeispiel mit mehreren Varianten näher erläutert. In der zugehörigen Zeichnung zeigt
- Fig. 1: eine schematische Darstellung eines Mähdreschers im teilweisen Längsschnitt,

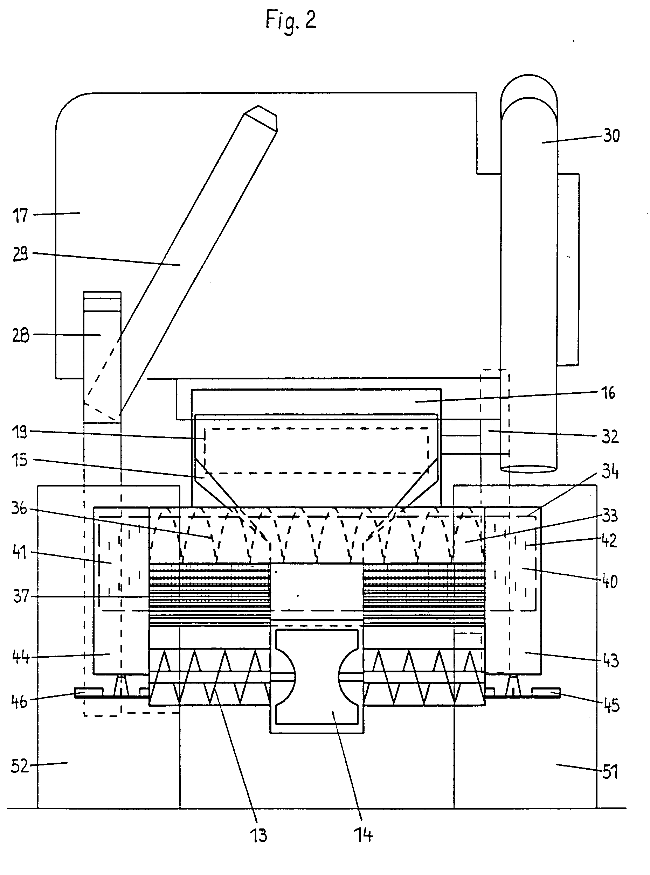

- Fig. 2: den Schnitt A-A nach Fig. 1,

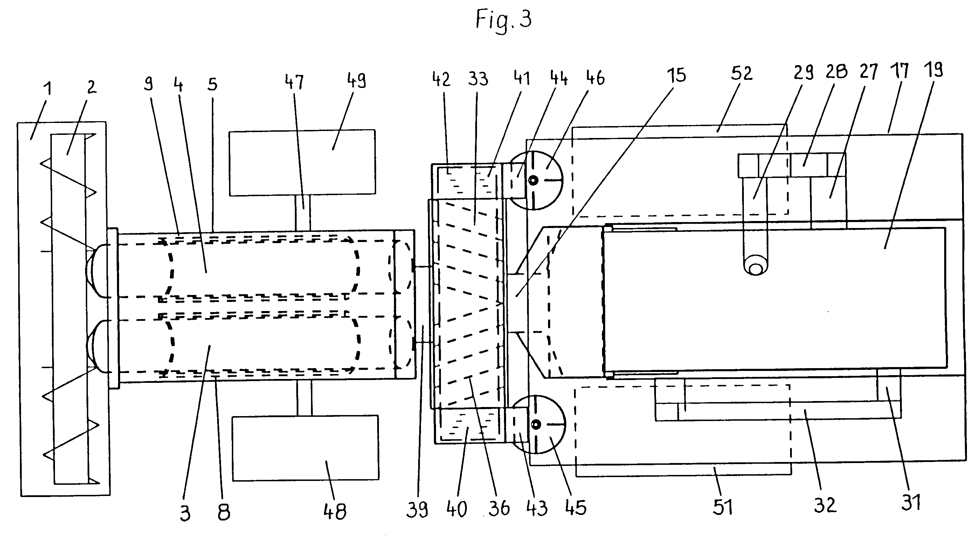

- Fig. 3: den Schnitt B-B nach Fig. 1.

Bei dem in der Zeichnung dargestellten Axialflußmähdrescher gelangt das Erntegut vom Schneidwerk 1 über eine Halmförderschnecke 2 direkt zu der Drescheinrichtung, die aus zwei längs zur Fahrtrichtung angeordneten Dresch- und Trenntrommeln 3,4 besteht.
Diese sind in einem gemeinsamen Gehäuse 5 angeordnet, das um eine Achse 6 schwenkbar mit dem Maschinenrahmen 7 verbunden ist. Die Achse 6 ist zugleich die Eingangswelle für das Antriebsgetriebe für die Dresch- und Trenntrommeln 3,4. Das Schneidwerk 1 ist mit dem Gehäuse 5 lösbar verbunden. Das Heben und Senken des Schneidwerks 1 erfolgt über hydraulische Arbeitszylinder, die zwischen dem Maschinenrahmen 7 und dem Gehäuse 5 angeordnet sind. Das Ausdreschen des Erntegutes und das Trennen der einzelnen Bestandteile geschieht im Bereich der Dresch- und Trenntrommeln 3,4 im Verlauf der Förderbewegung zwischen den Dreschleisten und den Dresch- und Trennkörben 8,9 in einem Ringkanal 10. Das abgeschiedene Korn-Spreu-Kurzstroh-Gemisch gelangt in unterhalb von den Dresch- und Trennkörben 8,9 angeordneten Sammelschnecken 11 am abgabeseitigen Ende über ein Leitblech 12 zu einer quer zur Fahrtrichtung verlaufenden, mittig geteilten Förderschnecke 13.
Zwischen den beiden zur Mitte fördernden Hälften der Förderschnecke 13 ist ein Fördergebläse 14 angeordnet, das das in axialer Richtung zugeführte Erntegemisch in tangentialer Richtung in einen Förderkanal 15 leitet und über diesen einem Sichterraum 16 zuführt.

Nach einer anderen Variante kann die geteilte Förderschnecke 13 das Erntegutgemisch auch von der Mitte aus zu den beiden Enden fördern und über jeweils an den äußeren Enden angeordnete Fördergebläse und sich daran anschließende einzelne Förderkanäle zu dem gemeinsamen Sichterraum 16 leiten. Der separate Sichterraum 16 ist im Bereich unterhalb des Korntanks 17 angeordnet. Seine obere Begrenzung wird direkt durch die Bodenwand 18 des Korntanks 17 gebildet. In seinem unteren Bereich sind ein schwingbeweglicher Siebboden 19 und zwei darunter befindliche Rücklaufböden 20, 21 angeordnet. Oberhalb des Siebbodens 19 erfolgt in dem freien luftdurchströmten Raum der Sichtvorgang.

Infolge der verringerten Luftgeschwindigkeit setzen sich die Körner und die schwereren Kurzstrohteile in dem großräumigen und nach hinten offenen Sichterraum 16 auf dem Siebboden 19 ab. Die Körner und kleineren Beimengungen gelangen durch die Öffnungen des Siebbodens 19 hindurch auf die darunterliegenden schräg geneigt verlaufenden Rücklaufböden 20, 21 und von diesen zu einer bekannten Siebeinrichtung, die darunter angeordnet ist. Die Siebeinrichtung besteht aus einem Gebläse 22 mit Luftaustrittskanal 23 und aus zwei Obersieben 24, 25 sowie aus einem Untersieb 26. Ebenso ist es möglich, anstelle von schwingbeweglichen ebenen Sieben eine rotierende Siebeinrichtung einzusetzen. Die Spreu wird durch die Luftströmung des Fördergebläses 14 aus dem Sichterraum 16 nach hinten auf den bereits abgelegten Strohschwad ausgetragen. Durch diese Ablageart ist es möglich, auch die auf dem Stroh obenliegenden kleinen Bestandteile, wie die Spreu und Unkrautsamen in einem gemeinsamen Schwad vom Feldboden aufzunehmen. Die an der Siebeinrichtung abgeschiedenen Körner gelangen über eine Körnerschnecke 27 und einen sich daran anschließenden Elevator 28 zu einer Füllschnecke 29 und über diese in den Korntank 17. Der großvolumig ausgebildete Korntank 17 ist über eine schwenkbare Abtankschnecke 30 entleerbar. Das am Endbereich des Obersiebes 25 abgeschiedene Gutgemisch wird über eine Förderschnecke 31 und einen Elevator 32 zum Siebboden 19 gefördert und auf diesem zum nochmaligen Trennvorgang abgegeben.

Unterhalb des Abgabebereiches der Drescheinrichtung ist für das aus den beiden Ringkanälen 10 aus tretende Stroh ein quer zur Fahrtrichtung liegender Trommelseparator 33 angeordnet. Er besteht aus einer angetriebenen Trommel 34 mit am Umfang angebrachten Förderleisten. Die Trommel 34 ist im oberen Bereich mit einer geschlossenen halbzylindrischen Abdeckung 35 umgeben, an deren Innenseite gewendelte Förderrippen 36 angeordnet sind. Im unteren Bereich ist die Trommel 34 von einem Abscheidekorb 37 umschlossen. Unterhalb des Abscheidekorbes 37 ist ein schräg verlaufendes Leitblech 38 für die abgeschiedenen Restkörner angeordnet, das bis zum Einzugsbereich der Förderschnecke 13 reicht.

Das Stroh gelangt von den beiden Dresch- und Trenntrommeln 3,4 in zwei voneinander getrennten Gutströmen über ein Siebblech 39 zu der Einlauföffnung des Trommelseparators 33. Die sich noch im Stroh befindenden Körner werden am Siebblech 39 abgeschieden und gelangen in die darunter angeordnete Förderschnecke 13, die zu dem Fördergebläse 14 führt. Das in tangentialer Richtung in den Spalt zwischen der rotierenden Trommel 34 und dem Abscheidekorb 37 des Trommelseparators 33 eingeführte Stroh wird an der Oberfläche der Trommel 34 durch die Wirkung der Förderrippen 36 an der Abdeckung 35 und der Förderleisten an der Trommel 34 nach mehreren Umlaufbewegungen von der Mitte aus nach beiden seitlichen Enden gefördert, an denen Häckseleinrichtungen 40,41 angeordnet sind. Zu diesem Zweck ist die Trommel 34 in diesen Bereichen mit Häckselmessern 42 versehen. In axialer Verlängerung des Abscheidekorbes 37 sind an schwenkbaren Klappen Gegenschneiden befestigt, die mit den Häckselmessern 42 zusammenwirken. Das gehäckselte Stroh gelangt in tangentialer Richtung über sich an die Häckseleinrichtungen 40, 41 anschließende Auswurfkanäle 43,44 auf darunter angeordnete rotierende Strohverteiler 45, 46, die das Stroh entsprechend der Drehrichtung zur Mitte fördern und dort in einem Schwad auf dem Feld ablegen oder nach beiden Seiten neben dem Mähdrescher großflächig verteilen.

Sofern das Stroh nicht gehäckselt werden soll, werden die Klappen mit den Gegenschneiden aus dem Wirkungsbereich der Häckselmesser 42 weggeschwenkt. Dadurch fällt das Stroh ungehäckselt auf die Strohverteiler 45, 46. Die Häckseleinrichtungen 40, 41 können ein Bestandteil des Trommelseparators 33 sein oder als selbständige Baugruppen mit einem eigenen Antrieb ausgebildet sein.

Bei Mähdreschern mit einer geringeren Leistungsfähigkeit oder bei der ständigen Ernte von Halmfrüchten mit einem niedrigen Strohanteil kann der Trommelseparator 33 auch entfallen und das Stroh nach der Drescheinrichtung über eine freie Durchtrittsöffnung direkt auf den Feldboden abgegeben werden.

Das Fahrwerk des Mähdreschers ist vorzugsweise mit einer pendelnden Vorderachse 47 mit lenkbaren Vorderrädern 48, 49 und einer starr am Maschinenrahmen 7 befestigten Hinterachse 50 mit nichtlenkbaren Hinterrädern 51, 52 versehen. Der Radantrieb erfolgt mechanisch oder hydrostatisch über den Antriebsmotor 53. Während bei der Feldfahrt ein Allradantrieb zuschaltbar ist, werden bei der Staßenfahrt nur die Vorderräder 48, 49 oder Hinterräder 51,52 angetrieben. Durch diese Antriebskonzeption wird auf dem Feld eine günstige Kraftübertragung auf dem Boden erreicht und auf der Straße hohe Transportgeschwindigkeiten ermöglicht.

### Bezugszeichenaufstellung

- 1: Schneidwerk
- 2: Halmförderschnecke
- 3,4: Dresch- und Trenntrommeln
- 5: Gehäuse
- 6: Achse
- 7: Maschinenrahmen
- 8,9: Dresch- und Trennkörbe
- 10: Ringkanal
- 11: Sammelschnecke
- 12: Leitblech
- 13: Förderschnecke
- 14: Fördergebläse
- 15: Förderkanal
- 16: Sichterraum
- 17: Korntank
- 18: Bodenwand
- 19: Siebboden
- 20,21: Rücklaufböden
- 22: Gebläse
- 23: Luftaustrittskanal
- 24,25: Obersieb
- 26: Untersieb
- 27: Körnerschnecke
- 28: Elevator
- 29: Füllschnecke
- 30: Abtankschnecke
- 31: Förderschnecke
- 32: Elevator
- 33: Trommelseparator
- 34: Trommel
- 35: Abdeckung
- 36: Förderrippen
- 37: Abscheidekorb
- 38: Leitblech
- 39: Siebblech
- 40,41: Häckseleinrichtung
- 42: Häckselmesser
- 43,44: Auswurfkanäle
- 45,46: Strohverteiler
- 47: Vorderachse
- 48,49: Vorderräder
- 50: Hinterachse
- 51,52: Hinterräder
- 53: Antriebsmotor

## Patentansprüche

1. Selbstfahrender Mähdrescher mit einem Schneidwerk (1), einer Drescheinrichtung und einer Korn-Stroh-Beimengungs-Trenneinrichtung, wobei
die Drescheinrichtung in einem schwenkbaren Gehäuse (5) angeordnet ist, das sich unmittelbar an das Schneidwerk (1) anschließt und mit diesem lösbar verbunden ist, gekennzeichnet durch folgende Merkmale:
a) unterhalb des abgabeseitigen Abscheidebereiches der Drescheinrichtung ist eine pneumatische Fördereinrichtung angeordnet,
b) an den Auswurfbereich der pneumatischen Fördereinrichtung schließt sich ein luftdurchströmter Sichterraum (16) an,
c) unterhalb des Sichterraumes (16) ist eine Siebeinrichtung angeordnet,
d) unterhalb des Abgabebereiches der Drescheinrichtung ist für das Stroh ein Trommelseparator (33) oder eine Freie Durchtrittsöffnung zum Feldboden angeordnet.

2. Selbstfahrender Mähdrescher nach Anspruch 1, dadurch gekennzeichnet, daß unterhalb des abgabeseitigen Abscheidebereiches der Drescheinrichtung eine quer zur Fahrtrichtung verlaufende, mittig geteilte Förderschnecke (13) mit einem Fördergebläse (14) angeordnet ist.

3. Selbstfahrender Mähdrescher nach Anspruch 1 und 2, dadurch gekennzeichnet, daß sich an die Auswurföffnung des Fördergebläses (14) ein Förderkanal (15) anschließt, der in den Sichterraum (16) mündet.

4. Selbstfahrender Mähdrescher nach Anspruch 1 bis 3, dadurch gekennzeichnet, daß in dem nach hinten offenen Sichterraum (16) im unteren Bereich ein schwingbeweglicher Siebboden (19) und zwei darunter befindliche Rücklaufböden (20, 21) angeordnet sind.

5. Selbstfahrender Mähdrescher nach Anspruch 1 bis 4, dadurch gekennzeichnet, daß oberhalb des Bereiches des Sichterraumes (16) ein Korntank (17) und unterhalb eine Korn-Beimengungs-Siebeinrichtung mit ebenen oder rotierenden Sieben angeordnet sind.

6. Selbstfahrender Mähdrescher nach Anspruch 1, dadurch gekennzeichnet, daß der unterhalb des Abgabebereiches der Drescheinrichtung quer zur Fahrtrichtung angeordnete Trommelseparator (33) aus einer angetriebenen Trommel (34) mit am Umfang angebrachten Förderleisten besteht, die im oberen Bereich von einer geschlossenen halbzylindrischen Abdeckung (35) mit gewendelten Förderrippen (36) und im unteren Bereich von einem Abscheidekorb (37) umgeben ist.

7. Selbstfahrender Mähdrescher nach Anspruch 1 und 6, dadurch gekennzeichnet, daß die Förderrippen (36) so angeordnet sind, daß das Stroh nach mehreren Umlaufbewegungen um die Trommel (34) von der Mitte aus nach beiden seitlichen Enden förderbar ist.

8. Selbstfahrender Mähdrescher nach Anspruch 1, 6 und 7, dadurch gekennzeichnet, daß an beiden Enden des Trommelseparators (33) Häckseleinrichtungen (40, 41) angeordnet sind.

9. Selbstfahrender Mähdrescher nach Anspruch 1 und 7, dadurch gekennzeichnet, daß sich an die Häckseleinrichtungen (40,41) Auswurfkanäle (43, 44) anschließen und daß unterhalb der Auswurfkanäle (43, 44) rotierende Strohverteiler (45, 46) angeordnet sind.

10. Selbstfahrender Mähdrescher nach Anspruch 1, dadurch gekennzeichnet, daß das Fahrwerk vorzugsweise mit einer pendelnden Vorderachse (47) mit lenkbaren Vorderrädern (48, 49) und einer starr am Maschinenrahmen (7) befestigten Hinterachse (50) versehen ist.

11. Selbstfahrender Mähdrescher nach Anspruch 1 und 10, daduch gekennzeichnet, daß für die Feldfahrt ein Allradantrieb zuschaltbar ist und für die Straßenfahrt nur ein Antrieb der Vorderräder (48, 49) oder Hinterräder (51, 52) vorgesehen ist.

## Claims

1. Automotive harvester with a cutting mechanism (1), a threshing device and a grain/straw mixture-separating device, wherein the threshing device is arranged in a pivotable housing (5) which directly adjoins the cutting mechanism (1) and is detachably connected therewith, characterised by the following features.
a) a pneumatic conveying device is arranged below the separating region, which is at the delivery side, of the threshing device,
b) a sifting chamber (16) flowed through by air adjoins the discharge region of the pneumatic conveying device,
c) a sieve device is arranged below the sifting chamber (16) and
d) a drum separator (33) for the straw or a free passage opening for the field soil is arranged below the delivery region of the threshing device.

2. Automotive harvester according to claim 1, characterised in that a centrally divided conveying worm (13), which extends transversely to the travel direction, with a conveying blower (14) is arranged below the separating region, which is at the delivery side, of the threshing device.

3. Automotive harvester according to claims 1 and 2, characterised in that a conveying channel (15), which opens into the sitting chamber (16), adjoins the discharge opening of the conveying blower (14).

4. Automotive harvester according to claims 1 to 3, characterised in that an oscillatingly movable sieve base (19) and two return movement bases (20, 21) disposed thereunder are arranged in the rearwardly open sitting chamber (16) in the lower region.

5. Automotive harvester according to claims 1 to 4, characterised in that a grain tank (17) is arranged above the region of the sifting chamber (16) and a grain mixture sieving device with flat or rotating sieves is arranged below the region of the sifting chamber (16).

6. Automotive harvester according to claim 1, characterised in that the drum separator (33), which is arranged below the delivery region of the threshing device transversely to the travel direction, consists of a driven drum (34) with conveying strips, which are mounted at the circumference and which are enclosed in the upper region by a closed semi-cylindrical cover (35) with coiled conveying ribs (36) and in the lower region by a separating basket (37).

7. Automotive harvester according to claims 1 and 6, characterised in that the conveying ribs (36) are so arranged that the straw can be conveyed, after several circulations around the drum (34), from the middle out to both lateral ends.

8. Automotive harvester according to claims 1, 6 and 7, characterised in that chopping devices (40, 41) are arranged at both ends of the drum separator (33).

9. Automotive harvester according to claims 1 and 7, characterised in that discharge channels (43, 44) adjoin the chopping devices (40, 41) and that rotating straw distributors (45, 46) are arranged below the discharge channels (43, 44).

10. Automotive harvester according to claim 1, characterised in that the chassis is provided with a swinging front axle (47) with steerable front wheels (48, 49) and a rear axle (50) rigidly fixed to the machine frame (7).

11. Automotive harvester according to claims 1 and 10, characterised in that an all-wheel drive can be switched on for field travel and only a drive of the front wheels (48, 49) or rear wheels (51, 52) is provided for road travel.

## Revendications

1. Moissonneuse batteuse automotrice comportant un mécanisme de coupe (1), une installation de battage ainsi qu'un séparateur paille/grains, l'installation de battage étant logée dans un boîtier (5) pivotant directement adjacent au mécanisme de coupe (1) et reliée de façon amovible à celui-ci,
caractérisée en ce que
a) en dessous de la zone de coupe, du côté de la sortie de l'installation de battage, il est prévu une installation de transfert pneumatique,
b) la zone d'éjection de l'installation de transfert pneumatique se poursuit par une chambre de séparation (16) traversée par un flux d'air,
c) en dessous de la chambre de séparation (16) se trouve une installation de tamisage,
d) en dessous de la zone de sortie de l'installation de battage, il est prévu un séparateur à tambour (33) pour la paille ou un orifice de passage libre vers le champ.

2. Moissonneuse batteuse automotrice selon la revendication 1,
caractérisée en ce qu'
en dessous de la zone de coupe, du côté de la sortie de l'installation de battage, il y a une vis de transfert (13), transversale par rapport à la direction de déplacement et qui est divisée en son milieu, avec une machine soufflante de transfert (14).

3. Moissonneuse batteuse automotrice selon les revendications 1 et 2,
caractérisée en ce que
l'orifice d'éjection de la machine soufflante de transfert (14) se poursuit par un canal de transfert (15) qui débouche dans la chambre de séparation (16).

4. Moissonneuse batteuse automotrice selon les revendications 1 à 3,
caractérisée en ce que
dans la chambre de séparation (16) ouverte à l'arrière, dans la zone inférieure, il y a un fond formant tamis (19), mobile en oscillation avec deux fonds de retour (20, 21) qui se trouvent en dessous.

5. Moissonneuse batteuse automotrice selon les revendications 1 à 4,
caractérisée en ce qu'
au-dessus de la zone de la chambre de séparation (16), il y a un réservoir à grains (17) et en dessous une installation à tamis de séparation de grains avec des tamis plans ou rotatifs.

6. Moissonneuse batteuse automotrice selon la revendication 1,
caractérisée en ce qu'
en dessous de la zone de sortie de l'installation de battage, il y a un séparateur à tambour (13) disposé transversalement à la direction de déplacement, formé d'un tambour (34) entraîné avec des barrettes de transfert à sa périphérie qui est entouré dans la zone supérieure par un capot (35) semi-cylindrique, fermé, avec des nervures de transfert (36) en spirale et dans la zone inférieure, il est entouré par un panier de séparation (37).

7. Moissonneuse batteuse automotrice selon les revendications 1 et 6,
caractérisée en ce que
les nervures de transfert (36) sont prévues pour que la paille après leurs mouvements de circulation autour du tambour (34), soit transférée du milieu vers les deux extrémités latérales.

8. Moissonneuse batteuse automotrice selon les revendications 1, 6 et 7,
caractérisée en ce qu'
aux deux extrémités du séparateur à tambour (33), il y a des installations de hachage (40, 41).

9. Moissonneuse batteuse automotrice selon les revendications 1 et 7,
caractérisée en ce que
les installations de hachage (40, 41) se poursuivent par des canaux d'éjection (43, 44) et en dessous des canaux d'éjection (43, 44), il y a des répartiteurs rotatifs de paille (45, 46).

10. Moissonneuse batteuse automotrice selon la revendication 1,
caractérisée en ce que
le châssis comporte de préférence un essieu avant (47) pendulaire avec des roues avant directrices (48, 49) et un essieu arrière (50) fixé rigidement au châssis (7) de la machine.

11. Moissonneuse batteuse automotrice selon les revendications 1 et 10,
caractérisée en ce que
pour le déplacement sur le champ, il comporte un entraînement avec toutes les roues motrices qui peut être commuté et pour le déplacement sur route, il n'y a qu'un entraînement des roues avant (48, 49) ou des roues arrière (51, 52).
